# EUROPEAN PATENT APPLICATION

(11) **EP 4 478 488 A1**
(43) Date of publication of application: **18.12.2024**
(21) Application number: 23752957.3
(22) Date of filing: 10.02.2023
(51) Int. Cl.: H01M 10/6556, B60K 1/04, B60K 11/04, H01M 10/613, H01M 10/617, H01M 10/625, H01M 10/643, H01M 10/647, H01M 10/6568

(54) **VEHICLE BATTERY UNIT**

(30) Priority: 10.02.2022 JP 2022019765; 12.01.2023 JP 2023002773
(71) Applicant: NIPPON STEEL CORPORATION, Chiyoda-ku Tokyo 100-8071 (JP)
(72) Inventor: KUBO, Tatsuhiro, Tokyo 100-8071 (JP); KAWACHI, Takeshi, Tokyo 100-8071 (JP); ITO, Yasunori, Tokyo 100-0006 (JP); NOMURA, Naruhiko, Tokyo 100-0006 (JP)
(74) Representative: Vossius & Partner Patentanwälte Rechtsanwälte mbB
(86) International application number: PCT/JP2023/004526
(87) International publication number: WO 2023/153495

(57) **Abstract**

There is provided a vehicle battery unit including: a battery module including a battery cell stack where chargeable-dischargeable battery cells are stacked; a housing case including upper and lower cases and having a housing space to house the battery module; a flow-path forming plate defining a plate-shaped refrigerant-flow-path with the lower-case bottom at a predetermined flow-path interval, the battery module being cooled with a liquid-refrigerant flowing through the plate-shaped refrigerant-flow-path from a bottom-rear-surface of the lower case, the plate-shaped refrigerant-flow-path having a flow region accounting for 90% or more of the bottom-rear-surface of the lower case; a refrigerant-supply-nozzle being a slit or flat nozzle, the liquid-refrigerant being supplied through the refrigerant-supply-nozzle to flow over 90% or more of a flow path width of the plate-shaped refrigerant-flow-path; a liquid-refrigerant-supply header that supplies the liquid-refrigerant to the refrigerant-supply-nozzle; and a liquid-refrigerant-discharge header that discharges the liquid-refrigerant from the plate-shaped refrigerant-flow-path.

## Description

### TECHNICAL FIELD

The present invention relates to a battery unit for a vehicle, more specifically to a cooling configuration of the battery unit for a vehicle.

### BACKGROUND ART

Electric conveyances such as electric vehicles and hybrid vehicles are equipped with a battery unit (battery pack) as a power storage device for supplying electric power to an electric motor. The battery unit mainly includes a battery module and a housing case that houses the battery module therein. Since output characteristics of the battery module deteriorate as a temperature of the battery module rises, the battery module is cooled inside the housing case or from outside the housing case.

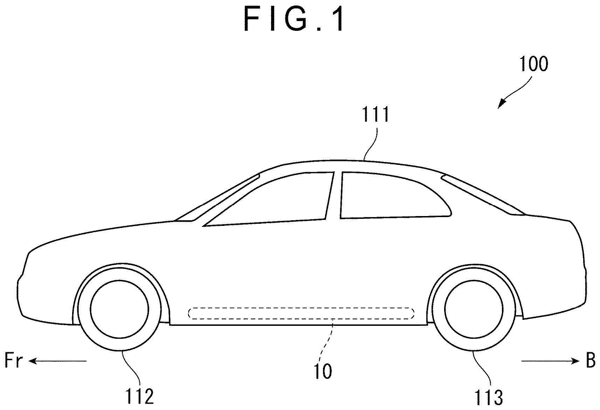

Also, in recent years, the battery unit for a vehicle has tended to increase in size as the battery module has increased in output and capacity in order to extend driving distances. For instance, as depicted in Fig. 1, a battery unit 10 is often installed under a floor panel, where a relatively large installation space can be easily secured, between front wheels 112 and rear wheels 113 of the vehicle 100.

The battery unit of which battery modules are configured to be cooled is exemplified by battery units disclosed in Patent Literatures 1 and 2. The battery unit 10 disclosed in Patent Literature 1 has a housing case 20 including an upper case (housing cover) 21 and a lower case (housing tray) 22 as depicted in Fig. 2 of the attached drawings of the invention. In the battery unit 10 disclosed in Patent Literature 1, the battery modules 11 are cooled by cooling air sucked by air blowers 61 with a cooler (not depicted) and blowing cold air to the battery modules 11 through air ducts 60 in the housing case 20.

Further, in the battery unit 10 disclosed in Patent Literature 2, as depicted in Fig. 3 of the attached drawings of the invention, the battery modules 11 in each of which a plurality of secondary battery cells (hereinafter also simply referred to as battery cells) 12 are stacked in a width direction of a vehicle are sequentially arranged in a front-and-back direction of the vehicle inside the housing case (not depicted). In the battery unit 10 disclosed in Patent Literature 2, the battery modules 11 by a liquid cooler 50 disposed on a rear surface of a bottom of the housing case. Detailing a flow of a refrigerant in this liquid cooler 50, first, the refrigerant is supplied through a refrigerant inlet 51 at a front end of a collective refrigerant forward route 54 to the collective refrigerant forward route 54. The refrigerant flows sequentially branched to refrigerant flow paths 53 just below the respective battery modules 11, then merges into a collective refrigerant return route 55, and flows to be discharged from a refrigerant outlet at a front end of the collective refrigerant return route 55.

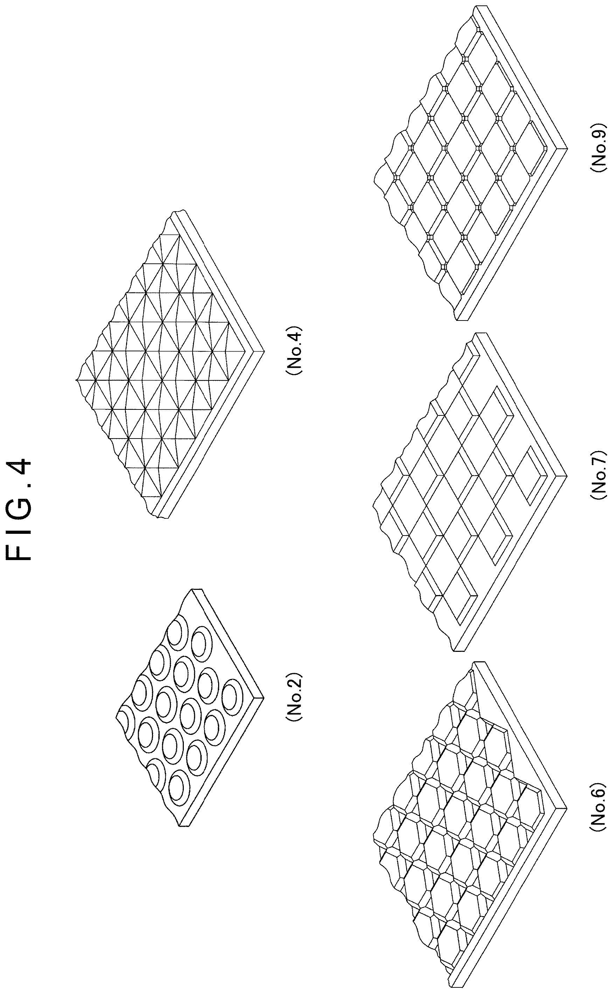

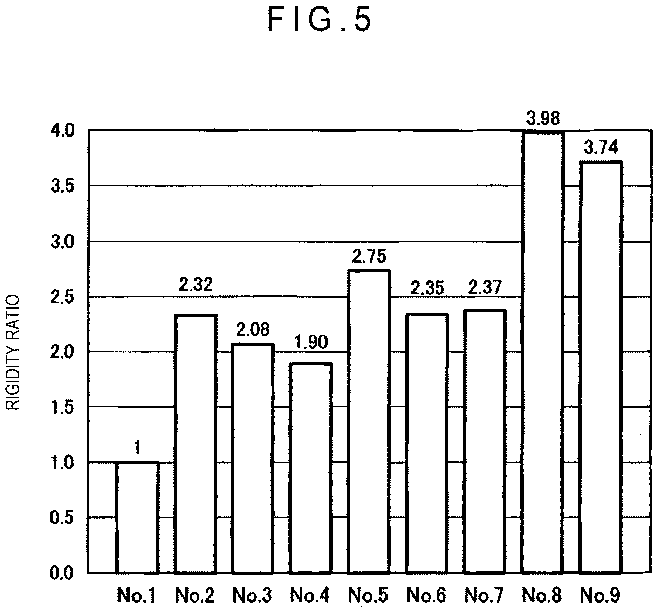

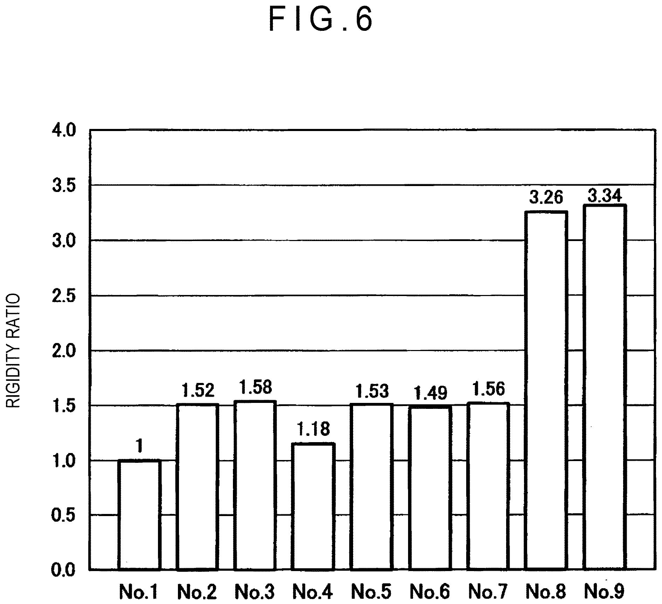

Patent Literature 3 discloses a panel formed using a coated metal plate that is obtained by at least one surface of a metal plate covered with a film layer, the panel including a raised portion and at least one of a flat portion or a sunken portion as given in Table 1 and Fig. 4 of the attached drawings of the invention. Specifically, in a case where the panel includes the flat portions, as denoted by No. 5 and No. 7 in Fig. 4 of the attached drawings of the invention, the entire circumference of each of the raised portions is surrounded by the flat portions and the entire circumference of each of the flat portions is surrounded by the raised portions. In a case where the panel includes the sunken portions, as denoted by No. 6, No. 8 and No. 9 in Fig. 4 of the attached drawings of the invention, the entire circumference of each of the raised portions is surrounded by the sunken portions and the entire circumference of each of the sunken portions is surrounded by the raised portions. As for such a panel shape, Fig. 5 shows results of FEM analysis of bending rigidity and Fig. 6 shows results of FEM analysis of torsional rigidity, with reference to a flat plate denoted by No. 1 and having no embossed portion. It is seen from Figs. 5 and 6 that the panel having embossed portions exhibit a higher rigidity than the flat plate No. 1 having no embossed portion, and specially, checkered embossed plates (embossed with raised and sunken portions having a truncated pyramid shape) denoted by No. 8 and No. 9 exhibit much higher rigidity. The invention of Patent Literature 3 can provide a panel that reliably enables high rigidity and weight reduction with such a simple configuration. Moreover, the invention of Patent Literature 3 can provide a panel having excellent corrosion resistance, scratch resistance, and even stain resistance by specifying a material for forming the panel.

**Table 1**

| No. | Characteristics of Embossed Plate |
|---|---|
| 1 | rimmed flate plate (comparison criteria)(not depicted) |
| 2 | rimmed flate plate + conical raised portions arranged mutually apart with their centers placed at equilateral triangle vertices |
| 3 | rimmed flate plate + conical raised portions arranged mutually apart with their centers placed at equilateral triangle vertices (not depicted) |
| 4 | rimmed flate plate + square pyramids arranged with edges in contact with each other |
| 5 | rimmed flate plate + hexagonal pyramidal raised portions densely arranged in diagonal direction (not depicted) |
| 6 | No. 5 + triangular pyramidal sunken portions arranged in triangular spaces between hexagonal pyramids |
| 7 | rimmed flate plate + square pyramidal raised portions densely arranged in diagonal direction |
| 8 | No. 7 + square pyramidal sunken portions arranged in square spaces between square pyramids (not depicted) |
| 9 | No. 8 + bridges (flat portions of reference plane remaining undented) arranged at diagonal contacts of sunken portion of each square pyramid |

### CITATION LIST

### PATENT LITERATURE(S)

Patent Literature 1: JP 2019-185970 A
Patent Literature 2: JP 2021-128892 A
Patent Literature 3: International Publication No. WO 2013/011868

### SUMMARY OF THE INVENTION

### PROBLEM(S) TO BE SOLVED BY THE INVENTION

However, in recent years, battery modules are required to have high output and large capacity in order to extend driving distances. In accordance with this demand, the heat generation amount during charge and discharge processes of the battery modules is increased and the cooling load for removing the generated heat is increased. However, a cooling device using a gaseous refrigerant as disclosed in Patent Literature 1 has a limit in increasing cooling capacity.

On the other hand, a cooling device using a liquid refrigerant as described in Patent Literature 2 can be more advantageous than the gaseous refrigerant as described in Patent Literature 1 in term of securing the cooling capacity. However, in the cooling device of Patent Literature 2, insulation breakdown, short circuits, or the like can be induced by leakage of the liquid refrigerant, which can cause vehicle fires. For this reason, the cooling device of Patent Literature 2 is arranged on a rear surface of a bottom, that is, on an outside of a housing case, unlike an arrangement of the cooling device inside the housing case as described in Patent Literature 1. Moreover, in the cooling device of Patent Literature 2, as depicted in Fig. 2, the refrigerant flow paths 53 of the liquid refrigerant are arranged immediately below battery modules 11 and the refrigerant flow paths 53 are branched from the collective refrigerant forward route 54. This arrangement of the refrigerant flow path in the cooling device of Patent Literature 2 is considered as an arrangement for efficiently cooling many battery modules 11 and for eliminating uneven cooling among the battery modules 11 as evenly as possible. However, this arrangement of the refrigerant flow paths in the cooling device further raises problems as described below when further reinforcement of the cooling capacity is required for further higher output and larger capacity of the battery modules.

Specifically, it is required to increase the number of the refrigerant flow paths in line with an increase in the number of the battery modules, which entails a complicated arrangement of the flow paths. For instance, when it is required to secure a heat transfer area by increasing the number of branching points of the flow path or by arranging the flow paths in a folded position, the total length of a seal portion increases as a measure against leakage from the flow paths, or pressure loss increases to require reinforcement of a refrigerant pump. Moreover, when more battery modules are housed in the limited space inside the housing case, the refrigerant flow paths may not be arranged over the entire bottoms of all the battery modules. Therefore, a higher thermal conductivity of the bottom of the housing case is more preferable. The thermal conductivity, however, is practically not uniform over the bottom of the housing case because materials used for the bottom of the housing case have mutually different thermal conductivities, which may be problematic. With reference to the thermal conductivities of metallic materials for industrial use, the thermal conductivities are 398 W/mKfor copper, 236 W/mK for aluminum, 90.9 W/mK for iron, and 84 W/mK for stainless steel. It is understood that the materials for the housing case also give a large influence on the thermal conductivities.

The invention has been made in light of the above-described problems. An object of the invention is to provide a battery unit for a vehicle with enhanced cooling capacity, of which needs are increased with a higher output and larger capacity of battery modules to achieve a long driving distance of the vehicle.

### MEANS FOR SOLVING THE PROBLEM(S)

[1] A battery unit for a vehicle includes: a battery module including a battery cell stack in which a plurality of battery cells are stacked, the battery cells being chargeable and dischargeable; a housing case including an upper case and a lower case, the housing case having a housing space formed therein to house the battery module; a flow-path forming plate defining a plate-shaped refrigerant flow path with a bottom of the lower case at a predetermined flow path interval therebetween, the battery module being cooled with a liquid refrigerant flowing through the plate-shaped refrigerant flow path from a bottom rear surface of the lower case, the plate-shaped refrigerant flow path having a flow region that accounts for 90% or more of the bottom rear surface of the lower case; a refrigerant supply nozzle being a slit nozzle or a flat nozzle, the liquid refrigerant being supplied through the refrigerant supply nozzle to flow over 90% or more of a flow path width of the plate-shaped refrigerant flow path; a liquid refrigerant supply header configured to supply the liquid refrigerant to the refrigerant supply nozzle; and a liquid refrigerant discharge header configured to discharge the liquid refrigerant from the plate-shaped refrigerant flow path.
[2] The battery unit for a vehicle according to [1], in which the flow-path forming plate includes a checkered embossed plate including raised portions and sunken portions that are each a truncated pyramid by embossing, the raised portions and the sunken portions being alternately and continuously connected to each other with four sides of a bottom of the truncated pyramid as boundaries.
[3] The battery unit for a vehicle according to [1] or [2], in which the liquid refrigerant supply header is arranged on an outside of a part of a vertical wall of the lower case on an upstream side of the liquid refrigerant, the liquid refrigerant discharge header is arranged on an outside of a part of the vertical wall of the lower case on a downstream side of the liquid refrigerant, and the liquid refrigerant supply header and the liquid refrigerant discharge header form an integrated configuration with the vertical wall of the lower case by making the vertical wall and a part of a header wall of each of the liquid refrigerant supply header and the liquid refrigerant discharge header a common wall to the integrated configuration.
[4] The battery unit for a vehicle according to [3], in which at least one of the liquid refrigerant supply header or the liquid refrigerant discharge header has a lower end in a header cross section at a height position of half or more of an inner dimension of the header cross section in a height direction from a lower end of the vertical wall of the lower case.
[5] The battery unit for a vehicle according to [1] or [2], in which the plate-shaped refrigerant flow path includes a spacing retainer by which the predetermined flow path interval is complementarily retained.
[6] The battery unit for a vehicle according to [5], in which the spacing retainer is a raised portion formed projecting into the flow path from one or both of the bottom of the lower case and the flow-path forming plate.
[7] The battery unit for a vehicle according to [1] or [2], in which the flow-path forming plate is arranged such that the flow path interval of the plate-shaped refrigerant flow path gradually decreases from an upstream side of the plate-shaped refrigerant flow path toward a downstream side thereof.

The above aspect of the invention can provide a battery unit for a vehicle which advantageously enables enhancement of cooling capacity that is required for a higher output and larger capacity of the battery modules to achieve a long driving distance of the vehicle, the battery unit including a plate-shaped refrigerant flow path by which the battery modules are cooled from a rear surface of a bottom of a housing case.

### BRIEF EXPLANATION OF DRAWING(S)

Fig. 1 depicts a vehicle installed with a battery unit according to a first exemplary embodiment.
Fig. 2 is an exploded perspective view of a battery unit including an air-cooled cooling device according to a related art.
Fig. 3 is an exploded plan view of a battery unit including a liquid-cooled cooling device according to a related art.
Fig. 4 is perspective views of various embossed panels according to a related art.
Fig. 5 is a diagram comparing the embossed panels of Fig. 4 in terms of bending rigidity.
Fig. 6 is a diagram comparing the embossed panels of Fig. 4 in terms of torsional rigidity.
Fig. 7 is an exploded perspective view of a divided part in half in a width direction of a lower case of the battery unit and a cooling device accompanying the lower case according to the first exemplary embodiment. Fig. 7 is also an enlarged partial cross-sectional view of an upstream side of a liquid refrigerant flow path.
Fig. 8 is a perspective view depicting an example in which a direction of the liquid refrigerant flow path of the cooling device accompanying the lower case of the battery unit depicted in Fig. 7 is changed to be in line with a width direction of a vehicle.
Fig. 9 is a longitudinal cross-sectional view in a flow path direction of a cooling device accompanying the lower case of the battery unit according to a first modification of the first exemplary embodiment.
Fig. 10 is an exploded perspective view of spacing retainers (raised portions), which are provided in a plate-shaped refrigerant flow path of a battery unit according to a third exemplary embodiment, the spacing retainers being arranged at predetermined positions on a flow-path forming plate.
Fig. 11A depicts an exemplary arrangement of the spacing retainers (raised portions) provided in the plate-shaped refrigerant flow path of the battery unit according to the third exemplary embodiment.
Fig. 11B depicts another exemplary arrangement of the spacing retainers (raised portions) provided in the plate-shaped refrigerant flow path of the battery unit according to the third exemplary embodiment.
Fig. 11C depicts still another exemplary arrangement of the spacing retainers (raised portions) provided in the plate-shaped refrigerant flow path of the battery unit according to the third exemplary embodiment.
Fig. 11D depicts still another exemplary arrangement of the spacing retainers (raised portions) provided in the plate-shaped refrigerant flow path of the battery unit according to the third exemplary embodiment.
Fig. 12A is a diagram explaining a pattern of a refrigerant flow path of an Inventive Example using a numerical simulation to verify effects of the present invention.
Fig. 12B is a diagram explaining a pattern of refrigerant flow paths of a Comparative using a numerical simulation to verify effects of the present invention.
Fig. 12C is a diagram explaining a pattern of refrigerant flow paths of another Comparative using a numerical simulation to verify effects of the present invention.
Fig. 13 is a diagram showing calculation results of flow-path pressure loss in each of Inventive Example and Comparatives using a numerical simulation to verify effects of the present invention.
Fig. 14 is a diagram showing calculation results of a heat transfer coefficient of a panel in each of Inventive Example and Comparatives using a numerical simulation to verify effects of the present invention.
Fig. 15 is a diagram showing calculation results of an average temperature of a flow path wall in each of Inventive Example and Comparatives using a numerical simulation to verify effects of the present invention.
Fig. 16A is a perspective view of a form of an embossed plate used for FEM analysis as a typical example of a checkered embossed plate serving as a flow-path forming plate of a battery unit according to a second exemplary embodiment.
Fig. 16B is a partial cross-sectional view of the embossed plate, used for FEM analysis depicted in Fig. 16A, taken along A-A cross section.
Fig. 17A is a partial cross-sectional view of a plate-shaped refrigerant flow path defined by a lower-case bottom and the flow-path forming plate in the battery unit according to the second exemplary embodiment. Fig. 17A also illustrates FEM analysis positions for temperature distribution.
Fig. 17B illustrates a temperature distribution, which is results of the FEM analysis, in a flow path thickness direction in Fig. 17A.
Fig. 18 is a longitudinal cross-sectional view in a flow path direction of a cooling device accompanying a lower case of a battery unit according to a fourth exemplary embodiment.
Fig. 19 is a diagram showing results of FEM analysis of a change in the maximum heat transfer coefficient within the panel, which is the heat transfer coefficient at the outlet, with respect to a flow path depth ratio of a depth at the inlet to a depth at the outlet of the plate-shaped refrigerant flow path in Fig. 18.
Fig. 20 is a diagram showing results of FEM analysis of a change in a temperature difference inside the flow path wall (a temperature at the output minus a temperature at the input) with respect to the flow path depth ratio of the depth at the inlet to the depth at the outlet of the plate-shaped refrigerant flow path in Fig. 18.

### DESCRIPTION OF EMBODIMENT(S)

Exemplary embodiments of the invention will be described in detail below with reference to the attached drawings. In the exemplary embodiments below, as an exemplary power storage device, explanation will be made on a battery unit mainly including battery modules and a housing case that houses the battery modules. In the exemplary embodiments below, the same or common parts are denoted by the same reference numerals in the figures, and the description thereof will not be repeated. The invention is by no means limited to exemplary embodiments below.

### First Exemplary Embodiment

Fig. 1 depicts a vehicle installed with a battery unit according to a first exemplary embodiment. A vehicle 100 installed with a battery unit 10 will be described with reference to Fig. 1

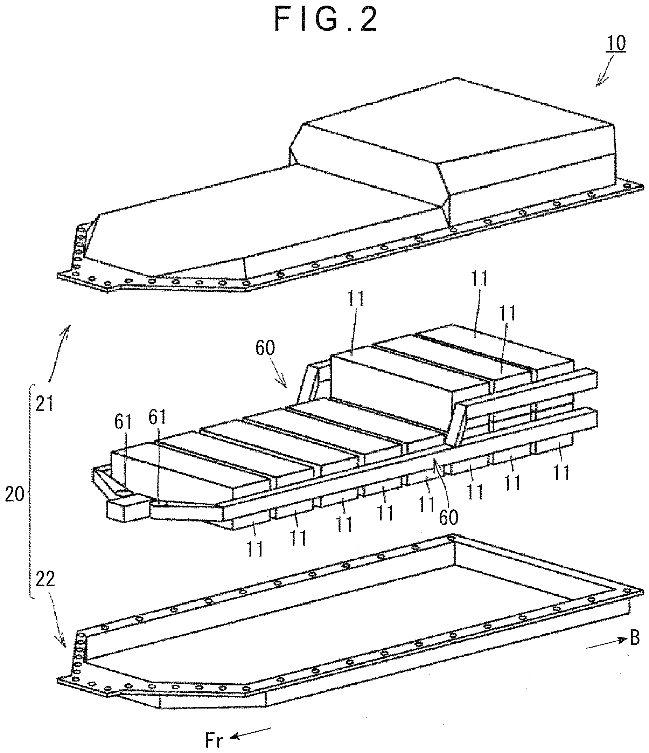

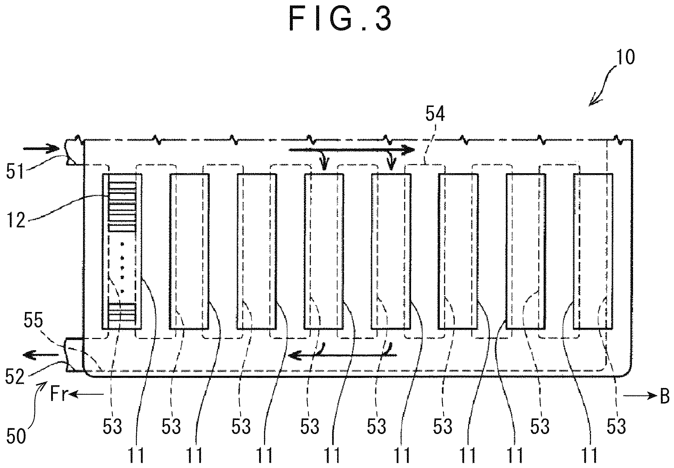

As depicted in Fig. 1, the vehicle 100 is, for instance, an electric automobile and includes an electric motor (not depicted) as a motor for driving a vehicle. The vehicle 100 includes a vehicle body 111, a floor panel (not depicted), front wheels 112, rear wheels 113, and a battery unit 10. The floor panel is a panel member forming a floor surface of the vehicle 100. The battery unit 10 is entirely disposed under the floor panel. The battery unit 10 is configured as a plurality of battery modules (see Figs. 2 and 3) electrically connected in series. With this configuration, the battery unit 10 can supply electric power at high output to an electric motor.

Herein, the wording simply described as a front-and-back direction means a front-and-back direction of the vehicle 100. Likewise, the wording simply described as a width direction means a width direction of the vehicle 100, and the wording simply described as a vertical direction means a vertical direction of the vehicle 100. It should be noted that in Fig. 1, forward is denoted by Fr and backward is denoted by B (the same applies to Figs. 2 and 3).

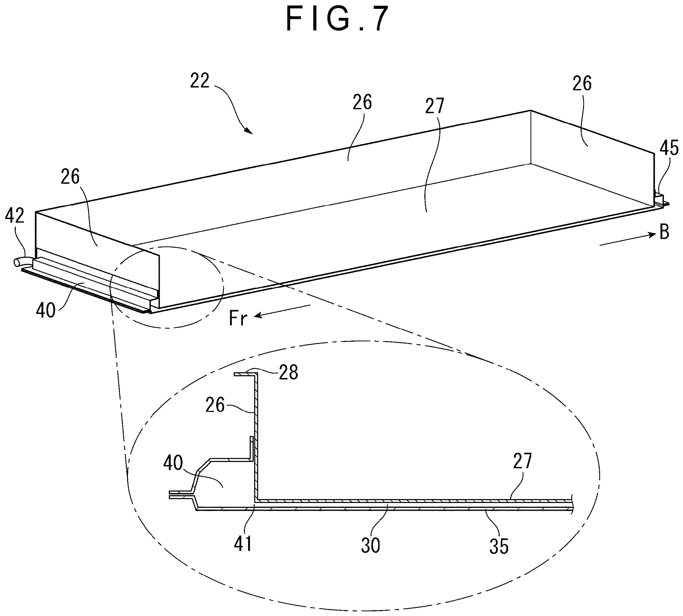

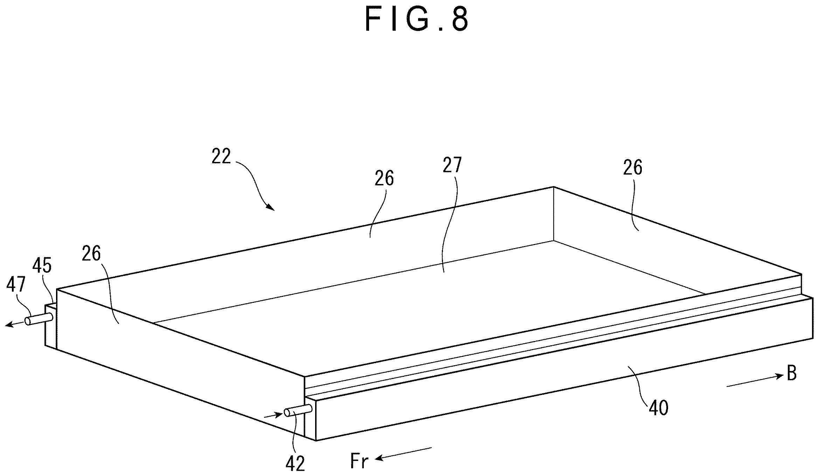

Fig. 7 is an exploded perspective view of a divided part in half in a width direction of a lower case of the battery unit and a cooling device accompanying the lower case according to the first embodiment. Fig. 7 is also an enlarged partial cross-sectional view of an upstream-side supply part of a liquid refrigerant. A configuration of the battery unit 10 having a plate-shaped refrigerant flow path 30 will be described with reference to Fig. 7 Fig. 7 depicts an example in which a liquid refrigerant flows in a front-and-back direction of a vehicle. However, the battery unit of the exemplary embodiment is by no means limited to this example. As depicted in Fig. 8, the liquid refrigerant may flow in a width direction of the vehicle. In Figs. 7 and 8, an entire view of the battery unit 10 is not depicted and also components similar to those in Figs. 2 and 3 indicating a related art, namely, battery cells 12, battery modules 11, an upper case 21, and a housing case 20 are not depicted.

The battery unit 10 of the exemplary embodiment has a primary configuration as follows. Specifically, the battery unit 10 includes battery modules 11 each containing a battery cell stack in which a plurality of battery cells 12 are stacked. The battery cells 12 are chargeable and dischargeable. The battery unit 10 further includes a housing case 20 including an upper case 21 and a lower case 22. The housing case 20 has a housing space formed inside in which battery modules 11 are housed. In the battery unit 10 of the exemplary embodiment, the plate-shaped refrigerant flow path 30 is formed. The plate-shaped refrigerant flow path 30 is a refrigerant flow path for cooling the battery modules 11 from a rear surface of a bottom 27 of the lower case 22 with a liquid refrigerant. A flow region of the plate-shaped refrigerant flow path 30 accounts for 90% or more of a bottom rear surface of the lower case 22. The battery unit 10 includes a flow-path forming plate that defines, between itself and the bottom of the lower case, the plate-shaped refrigerant flow path 30 with a predetermined flow path space. The battery unit 10 also includes a refrigerant supply nozzle 41 including a slit nozzle or a flat nozzle. A liquid refrigerant supplied through the refrigerant supply nozzle 41 flows over 90% or more of a flow path width of the plate-shaped refrigerant flow path 30. The battery unit 10 further includes: a liquid refrigerant supply header 40 configured to supply a liquid refrigerant to the refrigerant supply nozzle 41; and a liquid refrigerant discharge header 45 configured to discharge the liquid refrigerant from the plate-shaped refrigerant flow path 30. Here, a typical slit nozzle or flat nozzle is disclosed as the refrigerant supply nozzle 41. However, the refrigerant supply nozzle 41 is not limited thereto. Any refrigerant supply nozzle capable of producing the same effects as the typical slit nozzle or flat nozzle is also usable.

In the exemplary embodiment, the housing case 20 is a case body having a housing space therein as depicted in Figs. 7 and 8. The vertical direction is a thickness direction of the housing case 20. The housing case 20 has an appearance extending in a horizontal direction. The housing case 20 has a longitudinal shape. A longitudinal direction of the housing case 20 is in parallel to a front-and-back direction of a vehicle in an installed state where the battery unit 10 is installed. A traverse direction of the housing case 20 is in parallel to a width direction of the vehicle in the installed state.

In the exemplary embodiment, the battery modules 11 (see Figs. 2 and 3), in each of which a plurality of battery cells (secondary battery cells) 12 are stacked in the width direction of the vehicle, are sequentially arranged and housed in the front-and-back direction of the vehicle inside the housing case 20.

In the exemplary embodiment, the housing case 20 has the upper case 21 and the lower case 22 (see Fig. 2). The upper case 21 may have a box shape that opens downward or may simply have a flat lid shape. The lower case 22 has a box shape that opens upward. The lower case 22 has the above-described bottom 27 and a vertical wall 26. The vertical wall 26 extends upward from a periphery edge of the bottom 27. The vertical wall 26 alone or together with a vertical wall of the upper case 21 serves as a side wall of the housing case 20. A flange 28 is in a flange shape by expanding outward beyond the housing case 20 from an upper end portion of the vertical wall 26.

In the exemplary embodiment, the flange 28 of the lower case and the flange of the upper case are overlaid on each other in the vertical direction, and in this state, are fastened using a plurality of fastening members (not depicted) (see Figs. 2 and 7). With this operation, the upper case 21 and the lower case 22 are integrally jointed and form a housing space therein for housing a plurality of battery modules 11 and the like.

In the exemplary embodiment, a single cell included in the battery cells 12 (see Fig. 3) is, for example, a secondary battery such as a nickel hydrogen battery or a lithium ion battery. The single cell has, for instance, a quadrangular shape. It should be noted that the shape of the single cell is not limited to a quadrangular shape but may be a cylindrical shape. The secondary battery may use a liquid electrolyte or a solid electrolyte.

In the exemplary embodiment, as depicted in Fig. 7, the battery unit 10 further includes a cooling device at a lower part of the lower case 22, the cooling device including the plate-shaped refrigerant flow path 30 and accompanying components thereof. The cooling device cools each of the battery modules 11 (see Figs. 2 and 3) of the battery unit 10 from the rear surface of the bottom 27 of the lower case 22 by a liquid refrigerant flowing through the plate-shaped refrigerant flow path 30.

In the exemplary embodiment, as depicted in Figs. 7 and 8, the cooling device includes a liquid refrigerant supply header 40 on an upstream side of the plate-shaped refrigerant flow path 30. While temporarily storing the liquid refrigerant supplied from a liquid refrigerant introduction pipe 42, the liquid refrigerant supply header 40 supplies the liquid refrigerant to the plate-shaped refrigerant flow path 30 through a refrigerant supply nozzle 41 extending in a width direction of the flow path. This refrigerant supply nozzle 41 is provided by a known slit nozzle or flat nozzle. With a nozzle configuration extending in the width direction of the flow path, the liquid refrigerant supplied from the refrigerant supply nozzle 41 flows over 90% or more of the width of the flow path excluding spacing retainers or the like at a uniform flow rate distribution. It should be noted that the refrigerant supply nozzle 41 may be divided as needed into plural parts in the width direction of the flow path. The cooling device also includes the liquid refrigerant discharge header 45 and a liquid refrigerant outlet pipe 47 on a downstream side of the plate-shaped refrigerant flow path 30. The liquid refrigerant discharge header 45 temporarily stores the liquid refrigerant discharged from the plate-shaped refrigerant flow path 30, thereby bringing the liquid refrigerant into a uniform flow rate distribution in the flow path width direction within the plate-shaped refrigerant flow path 30.

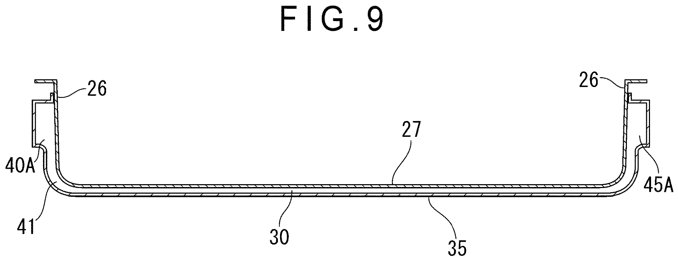

In the exemplary embodiment, as depicted in Figs. 7 and 8, the liquid refrigerant supply header 40 and the liquid refrigerant discharge header 45 form an integrated configuration with the vertical wall 26 of the lower case 22 by disposing a part of a header wall of each of the headers 40 and 45 at the outside of the vertical wall 26 of the lower case 22 to make the part and the vertical wall 26 a common wall to the integrated configuration. By integrating the liquid refrigerant supply header 40 and the liquid refrigerant discharge header 45 with the vertical wall 26 of the lower case 22, it is possible to reduce the number of the components and make the battery unit 10 more compact. Moreover, in a case where a cross-sectional shape of each of the liquid refrigerant supply header 40 and the liquid refrigerant discharge header 45 depicted in Fig. 7 is, for instance, thinned without changing a cross-sectional area thereof (see, for instance, Figs. 8 and 9), an amount of the battery modules 11 to be housed in a limited space for setting the battery unit 10 is also increasable.

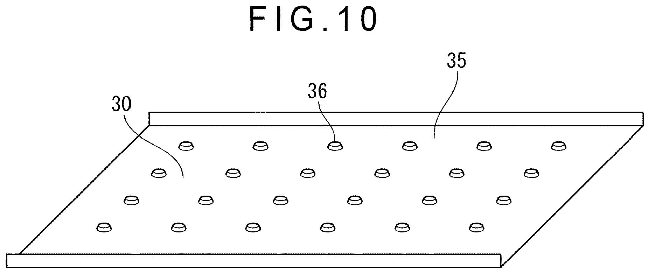

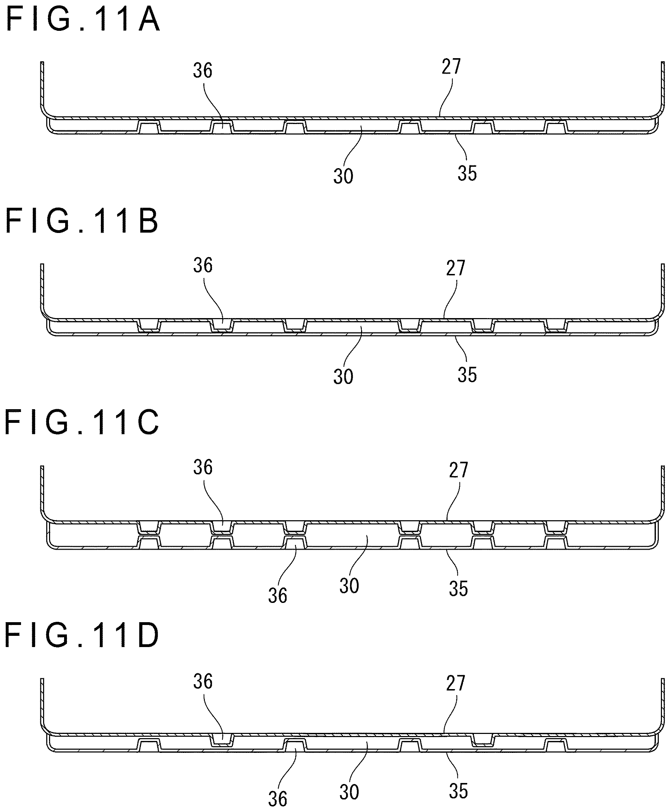

In the exemplary embodiment, a flow region of the plate-shaped refrigerant flow path 30 is defined as a region of 90% or more of the rear surface of the bottom 27 of the lower case 22 except for areas provided with later-described spacing retainers (see Figs. 10 and 11) and the like that complementarily retain a flow path space, such as spacers or raised portions projecting from a flow path wall. The plate-shaped refrigerant flow path 30 having this configuration enables uniform cooling of all the battery modules 11 irrespective of housing positions of the battery modules 11 within the housing case. In this case, since thermal conduction in an in-plane direction of the bottom 27 of the lower case 22 hardly affects cooling of the battery modules 11, even if the bottom 27 of the lower case 22 is made of a steel plate whose thermal conductivity is relatively low among industrial metal materials, the battery modules within the housing case 20 can be efficiently cooled. Thus, in a case where the plate-shaped refrigerant flow path 30 is employed, a material for the lower case 22 can be selected more freely.

Instead of the plate-shaped refrigerant flow path 30 according to the exemplary embodiment, a divided plate-shaped refrigerant flow path (not depicted) may be used. For instance, the divided plate-shaped refrigerant flow path is provided by: subdividing the plate-shaped refrigerant flow path 30 by disposing a flow path dividing portion (raised portion) at a predetermined position in a flow path width direction; further connecting front and rear ends of adjacent flow paths; and folding back the flow path in a flow path direction. In this case, since the refrigerant is turned back in the flow path direction, a decrease in temperature uniformity in the flow path direction, which is caused by an increase in a temperature of the refrigerant per se as the refrigerant flows, can be offset between adjacent divided plate-shaped refrigerant flow paths. In other words, the temperature uniformity can be enhanced at any positions in the divided plate-shaped refrigerant flow paths from an upstream side to a downstream side, so that the inside of the housing case 20 can be uniformly cooled at any positions. For instance, as in a case where the divided plate-shaped refrigerant flow path in the middle of the width direction is set as a supply side of the refrigerant flow path and the divided plate-shaped refrigerant flow paths on both widthwise sides are set as discharge sides of the refrigerant flow path, the liquid refrigerant supply header 40 and the liquid refrigerant discharge header 45 can be aligned on one side of the bottom of the battery unit 10. With this configuration, a cooling device can be easily connected to a pump, a radiator and the like for a refrigerant, which accompany the cooling device.

In the exemplary embodiment, the cooling device is connected to a pump and a radiator for a refrigerant (not depicted). It should be noted that a liquid refrigerant here may be, for instance, water or long life coolant (LLC). LLC is exemplified by an aqueous solution whose 50 mass% is glycerin and whose characteristics are, for instance, a density of 1073 kg/m³, a kinematic viscosity of 4.322 mPa·s, a specific heat of 3299 J/kg·K, a thermal conductivity of 0.39 W/m·K, and the like at a temperature of 20 degrees C.

Next, results of a verification test using a numerical simulation on effects of the plate-shaped refrigerant flow path will be described.

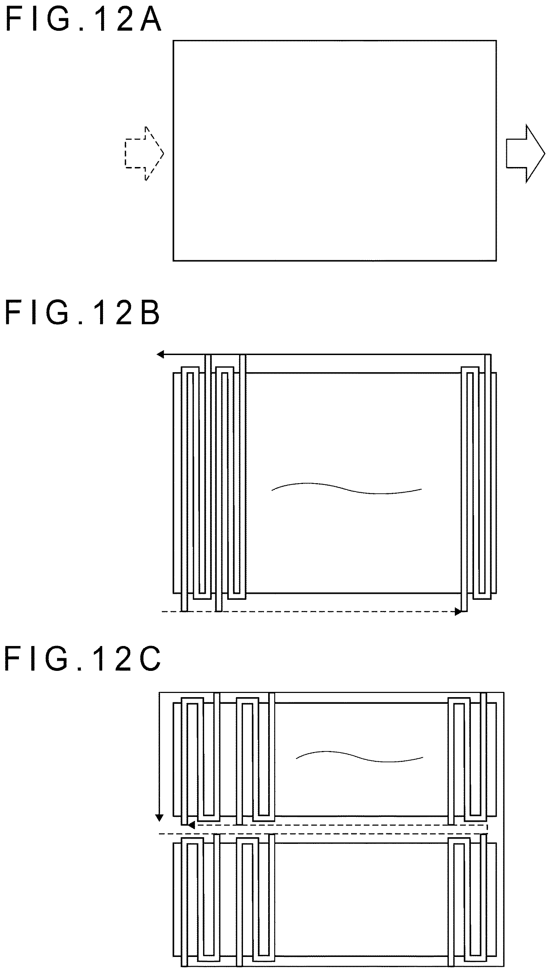

Figs. 12A to 12C illustrate total three refrigerant flow path patterns in Inventive Example and Comparatives under the same condition that a dimension of a cooling surface is set at 1675 mm length × 1156 mm width. Specifically, Fig. 12A illustrates a refrigerant flow path pattern of a plate-shaped refrigerant flow path in Inventive Example 1 where a flow region of a refrigerant expands across the entire width thereof. Fig. 12B illustrates a refrigerant flow path pattern (external connection) in Comparative 1, where the refrigerant flow path consists of 60 paths (provided by 20 branches, each branch being folded twice and traverses a width of the path three times) traverse the entire width of the refrigerant flow path, and widthwise ends of each path are connected to a supply pipe and a discharge pipe, respectively. Fig. 12C illustrates a refrigerant flow path pattern (internal connection) in Comparative 2, where the refrigerant flow path is divided in half in the width direction, 30 paths (provided by 10 branches, each branch being folded twice and traverses the width of the divided refrigerant flow path three times) traverse the width of the divided refrigerant flow path in each region of the divided refrigerant flow path, total 60 paths (provided by 20 branches, each branch being folded twice and traverses the width of the divided refrigerant flow path three times) traverse the width of the refrigerant flow path not divided, and each path is connected to a supply pipe and a discharge pipe in the middle of the width of the refrigerant flow path.

In order to compare the difference in pressure loss among the three refrigerant flow path patterns described above, a flow path length corresponding to each of the pressure losses was calculated as follows, and it appears that there is not much difference in the flow path length.
Inventive Example 1: 1675 mm (that is the same as the total length of the flow path)
Comparative 1: 1156 × 3 traverses = 3468 mm
(The total length of the flow path is 3.468 × 20 branches = 69 m)
Comparative 2: 1156/2 × 3 traverses = 1734 mm
(The total length of the flow path is 1.734 × 20 branches = 34 m)

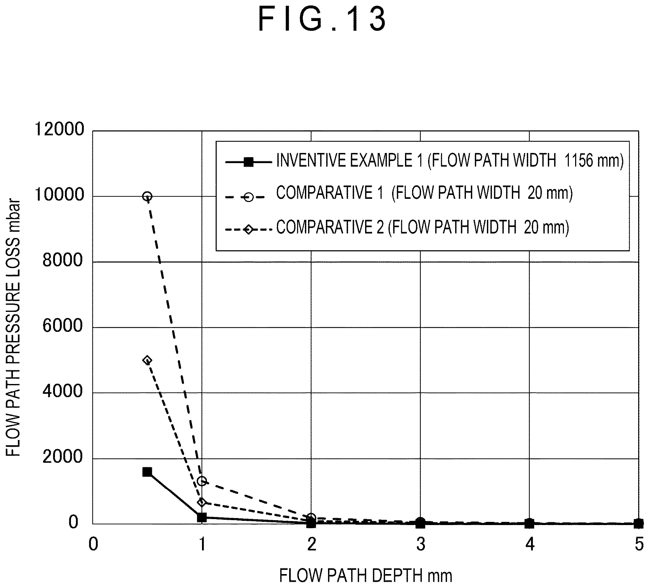

However, as shown in Fig. 13, when comparing the pressure loss per se for a refrigerant flow path depth at the same flow rate among Inventive Example and Comparatives, it is found that the invention example is significantly lower than Comparatives particularly when the refrigerant flow path depth (also referred to as the refrigerant flow path thickness) is 2 mm or less. It is thus expected from Fig. 13 that the invention can reduce the capacity of the equipment accompanying the cooling device, such as a refrigerant pump. Further, it is expected from the comparison of the total flow path length that a seal length of the flow path to provide liquid sealing in the invention can be drastically shorter than that in Comparatives.

Next, in all of Inventive Example and Comparatives, calculation was made in a steady state with a heat input amount set to 6 kW and a heat removal amount being equivalent to only heat removal by the refrigerant flow rate of 25 L/min.

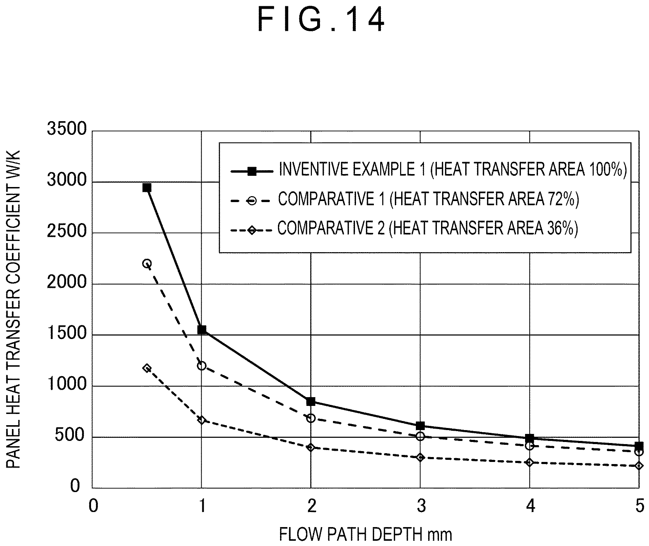

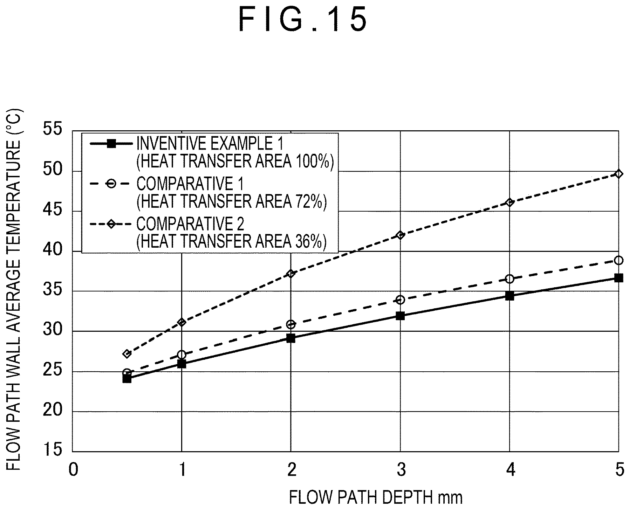

Here, assuming that a width of the refrigerant flow path in Comparatives is 20 mm, a heat transfer area is 72% in Comparative 1 and 36% in Comparative 2, taking Inventive Example 1 as 100%. Fig. 14 shows results of comparing Inventive Example and Comparatives in terms of the panel heat transfer coefficient with respect to the refrigerant flow path depth under the above condition of the refrigerant flow path width. Fig. 15 shows results of comparing Inventive Example and Comparatives in terms of the average temperature of the refrigerant flow path wall with respect to the refrigerant flow path depth under the same condition of the refrigerant flow path width. It is found from Fig. 14 that the panel heat transfer coefficient in Inventive Example is larger than in Comparatives, partly because the heat transfer area can be larger in Inventive Example than in Comparatives under the above condition of the refrigerant flow path width. Similarly, it is also found from Fig. 14 that the average temperature of the refrigerant flow path wall in Inventive Example can be kept lower than in Comparatives. As described above, it can be expected from Figs. 14 and 15 that the invention keeps the temperature of the battery modules 11, which are to be cooled, low.

### First Modification

Fig. 9 is a longitudinal cross-sectional view in a flow path direction of a cooling device accompanying the lower case 22 of the battery unit 10 according to a first modification of the first exemplary embodiment. Referring to Figs. 7, 8 and 9, a liquid refrigerant supply header 40A and a liquid refrigerant discharge header 45A according to this modification will be described.

As depicted in Fig. 9, in comparison with the first exemplary embodiment, the liquid refrigerant supply header 40A and the liquid refrigerant discharge header 45A according to this modification are different in that the lower end of the header cross section is positioned at a height that is half or more of an inner dimension of the header cross section in the height direction from the lower end of the vertical wall 26 of the lower case 22. This is determined based on the results of consideration of the average communication distance of air bubbles in the headers when air pockets form in the headers during the refrigerant flowing. In other words, an average location of bubbles is defined as the centroid of the header cross section, and an average communication distance between bubbles at the centroid and other bubbles is considered appropriate even if defined as the distance from the centroid of the header cross section to the end (including the lower end) (equivalent to half the height of the inner dimension in the height direction of the header cross section). Furthermore, it has been considered that, even if air bubbles form at the lower end of the header cross section, if the lower end of the header cross section is positioned at the height of half or more of the inner dimension of the header cross section in the height direction from the lower end of the vertical wall of the lower case, this distance exceeds the average communication distance of the air bubbles and therefore the air bubbles do not communicate with the bubbles in the plate-shaped refrigerant flow path. In the exemplary embodiment according to this modification, even if air bubbles get into the plate-shaped refrigerant flow path, the air bubbles are unlikely to communicate with each other and are expected to be quickly discharged from the plate-shaped refrigerant flow path while the air bubbles remain small. In the exemplary embodiment according to this modification, the position of the lower end of the header cross section is determined based on the above consideration. Other configurations are substantially the same as those in the first exemplary embodiment. It should be that the cross-sectional shapes of the liquid refrigerant supply header and the liquid refrigerant discharge header are different among in Figs. 7, 8 and 9, however, this regard is as described in the first exemplary embodiment and the same applies to this modification.

Even with the above configuration, the battery unit 10 according to the first modification can produce substantially the same effect as the battery unit 10 according to the first exemplary embodiment.

In addition, the lower end of the header cross section of the liquid refrigerant supply header 40A and/or the liquid refrigerant discharge header 45A is positioned at the height of half or more of the inner dimension of the header cross section in the height direction from the lower end of the vertical wall 26 of the lower case 22, whereby an inside of the plate-shaped refrigerant flow path 30 can be completely filled with the refrigerant without containing air bubbles or the like.

### Second Exemplary Embodiment

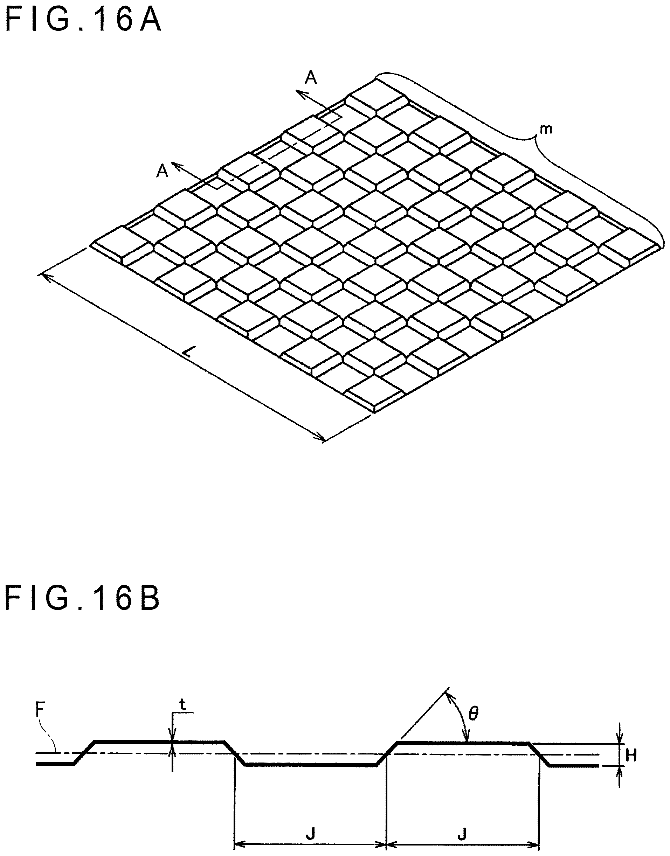

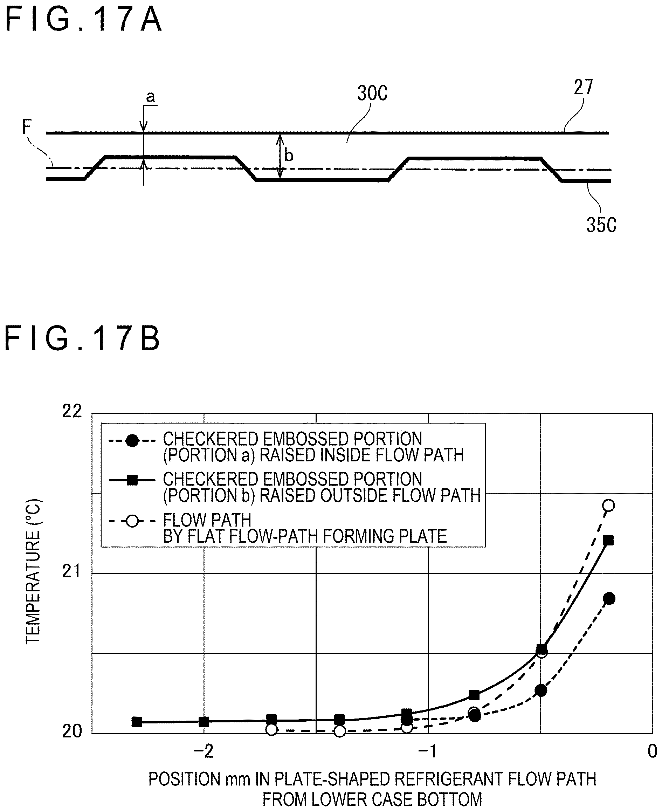

Fig. 16A is a perspective view of a form of an embossed plate used for FEM analysis as a typical example of a checkered embossed plate serving as a flow-path forming plate 35C of the battery unit 10 according to a second exemplary embodiment. Fig.16B is a partial cross-sectional view of the embossed plate, used for FEM analysis depicted in Fig. 16A, taken along A-A cross section. Fig. 17A is a partial cross-sectional view of a plate-shaped refrigerant flow path 30C defined by the bottom 27 of the lower case and a flow-path forming plate 35C in the battery unit 10 according to the second exemplary embodiment. Fig. 17A also illustrates FEM analysis positions for temperature distribution. Fig. 17B illustrates a temperature distribution, which is results of FEM analysis, in a flow path thickness direction in Fig. 17A. The battery unit 10 according to the second exemplary embodiment will be described with reference to Figs. 16A, 16B, 17A, and 17B.

As illustrated in Figs. 16A, 16B, 17A, and 17B, in comparison with the battery unit 10 according to the first exemplary embodiment, the battery unit 10 according to the second exemplary embodiment is different in that the checkered embossed plate is used as the flow-path forming plate 35C. Other configurations are substantially the same as those in the first exemplary embodiment.

Here, results of a verification test using a numerical simulation on effects of the checkered embossed plate will be described.

Dimensions of parts of the checkered embossed plate are defined by symbols shown in Figs. 16A and 16B. The dimensions of the parts in Figs. 16A and 16B are a distance H between a top surface of a truncated pyramid of the raised portion and a top surface of a truncated pyramid of the sunken portion, a plate thickness t, a length J of each side of the bottom of the truncated pyramid of each of the raised portion and the sunken portion, an inclination angle θ of an inclined surface of each of the raised portion and the sunken portion relative to a reference plane F, the number m of the raised portion and the sunken portion, and a plate size L.

As FEM analysis conditions for the plate-shaped refrigerant flow path 30C illustrated in Fig. 17A, first, the flow-path forming plate (checkered embossed plate) 35C was set to H = 2 mm, t = 1 mm, J = 30 mm, θ = 60 degrees, m = 38, and L = 100 mm. The plate-shaped refrigerant flow path 30C was formed with a 2-mm interval between the reference plane F of the flow-path forming plate 35C and the bottom 27 of the lower case.

As boundary conditions for the FEM analysis of the temperature distribution within the flow path, a heat flux of 1600 W/m² was applied to the bottom 27 of the lower case, a refrigerant was LLC with a glycerin concentration of 50 mass%, a temperature of the refrigerant at the inlet of the plate-shaped refrigerant flow path 30C was 20 degrees C, and a flow velocity of the refrigerant was 1 m/s.

Fig. 17B shows FEM analysis results of a temperature distribution in a flow path thickness direction of the plate-shaped refrigerant flow path 30C where the checkered embossed plate was disposed as the flow-path forming plate. It is revealed from Fig. 17B that the checkered embossed portion (portion a) that is raised on an inside of the flow path, when having a thickness of up to about 0.8 mm (40% of an average flow path thickness) from the bottom 27 of the lower case, exhibits a higher cooling capacity than a case where a flat flow-path forming plate 35 is arranged. It is also revealed from Fig. 17B that the checkered embossed portion (portion b) that is raised on an outside of the flow path, when having a thickness of up to about 0.5 mm (25% of the average flow path thickness) from the bottom 27 of the lower case, also exhibits a higher cooling capacity than a case where a flat flow-path forming plate 35 is arranged. This effect of improving the cooling capacity is presumably produced as follows: the flow of the refrigerant is disturbed by the unevenness of the checkered embossed plate, which improves the heat transfer coefficient.

Since the bottom of the battery unit 10 according to the exemplary embodiment was made of a large-area panel, the FEM analysis was also performed on an out-of-plane deflection amount of the flow path forming plate 35C made of the checkered embossed plate under the same analysis conditions as those described above. As a result, when the deflection of a flat flow path forming plate 35, which was caused by the liquid pressure of the refrigerant, was taken as 1, it was confirmed that the battery unit 10 of the exemplary embodiment, by adopting the checkered embossed plate as the flow path forming plate, had a deflection ratio of 0.7, thereby improving out-of-plane deformation. In view of this finding, a plate thickness t of the flow-path forming plate 35C can be thinned according to the amount of the out-of-plane deformation, a weight of the device can be decreased.

In view of this finding, a plate thickness t of the flow-path forming plate 35C can be thinned according to the allowable amount of the out-of-plane deformation of the bottom surface of the battery unit 10, a weight of the device can be decreased. Specifically, the distance H between the top surface of the truncated pyramid of the raised portion and the top surface of the truncated pyramid of the sunken portion is preferably in a range from 1 mm to 5 mm. This is because a flow in a vertical direction of the refrigerant is reduced to lower the cooling capacity when the distance H is less than 1 mm, and a cross-sectional area of the refrigerant is increased to decrease a flow velocity, thereby lowering the cooling capacity when the distance H exceeds 5 mm. The plate thickness t is preferably in a range from 0.3 mm to 5 mm. This is because a rigidity of the plate is low and the deflection of the plate is increased due to the liquid pressure of the refrigerant when the plate thickness t is less than 0.3 mm, and a weight of the battery unit is excessively large when the plate thickness t exceeds 5 mm. The length J of each side of the bottom of the truncated pyramid of each of the raised portion and the sunken portion is preferably in a range from 5 mm to 50 mm. This is because the resistance to the flow of the refrigerant is increased when the length J of each side is less than 5 mm, and a flow in the vertical direction of the refrigerant is reduced to decrease the cooling capacity when the length J of each side exceeds 50 mm. The inclination angle θ of the inclined surface of each of the raised portion and the sunken portion relative to the reference plane F is preferably in a range from 10 degrees to 75 degrees. This is because the flow in the vertical direction of the refrigerant is reduced to lower the cooling capacity when the inclination angle θ is less than 10 degrees, and the resistance to the flow of the refrigerant is increased when the inclination angle θ exceeds 75 degrees.

A type of metal plate usable as a base material for the checkered embossed plate according to the exemplary embodiment is not particularly limited. Examples of the metal plate include iron, iron-based alloys, aluminum, aluminum-based alloys, copper, and copper-based alloys. As the base material of the checkered embossed plate according to the exemplary embodiment, a coated metal plate prepared by coating a metal plate or a plated metal plate prepared by plating a metal plate is also usable as needed. Of these metal plates, the most suitable one for application to the exemplary embodiment is a zinc plated steel sheet or an aluminum plated steel sheet.

Even with the above configuration, the battery unit 10 according to the second exemplary embodiment can produce substantially the same effect as the battery unit 10 according to the first exemplary embodiment.

In addition, the cooling capacity and the plate-surface rigidity are improved by using the checkered embossed plate, thus making it possible to reduce the weight of the battery unit 10.

### Third Exemplary Embodiment

Fig. 10 is an exploded perspective view of spacing retainers (raised portions) 36, which are provided in the plate-shaped refrigerant flow path 30 of the battery unit 10 according to a third exemplary embodiment, is arranged at a predetermined position of the flow-path forming plate 35. The battery unit 10 according to the third exemplary embodiment will be described with reference to Fig. 10.

As illustrated in Fig. 10, in comparison with the battery unit 10 according to the first exemplary embodiment, the battery unit 10 according to the third exemplary embodiment is different in that the spacing retainers (raised portions) 36 are provided in the plate-shaped refrigerant flow path 30. Other configurations are substantially the same as those in the first exemplary embodiment. Moreover, the spacing retainers (raised portions) 36 according to the exemplary embodiment may be provided by increasing the raised amount of some of the raised portions of the checkered embossed plate according to the second exemplary embodiment.

The spacing retainers (raised portions) 36 keep the flow path interval of the plate-shaped refrigerant flow path 30 formed between the bottom 27 of the lower case 22 and the flow-path forming plate 35 at a predetermined interval. The spacing retainers (raised portions) 36, which are a member made of a resin or the like, may be a member joined to a rear surface of the bottom 27 of the lower case 22 and/or an inner surface of the flow path of the flow-path forming plate 35. Alternatively, the spacing retainers (raised portions) 36 may be raised portions formed by bulging from the rear surface of the bottom 27 of the lower case 22 and/or the inner surface of the flow path of the flow-path forming plate 35 through press molding or the like. Moreover, as depicted in Figs. 11A to 11D, regarding the arrangement of the spacing retainers (raised portions) 36 on inner walls of the plate-shaped refrigerant flow path 30, the spacing retainers (raised portions) 36 can be arranged on one or both of the inner walls of the plate-shaped refrigerant flow 30 defined by the rear surface of the bottom 27 of the lower case 22 and the flow-path forming plate 35. Further, as depicted in Fig. 11C, the spacing retainers (raised portions) 36 can be formed by combining members arranged on both the inner walls of the plate-shaped refrigerant flow 30 defined by the rear surface of the bottom 27 of the lower case 22 and the flow-path forming plate 35, or by combining raised portions bulging from both the members.

It should be noted that joining of the spacing retainers (raised portions) 36 or joining of the spacing retainers (raised portions) 36 and the inner surface of the flow path defined by the rear surface of the bottom 27 of the lower case 22 and/or the flow-path forming plate 35 may be performed by bonding or welding, or combination of bonding and welding. Of a contact area of the joint portions, the area subjected to bonding or welding may be an entire surface of the contact area of the joint portions or a part thereof. The welding here can be performed by spot welding, laser welding, projection welding, or the like.

Instead of such bonding or welding, the bottom 27 of the lower case 22 and/or the flow-path forming plate 35 may have a deformation prevention configuration on an opposite surface of the bottom 27 of the lower case 22 and/or the flow-path forming plate 35 from the plate-shaped refrigerant flow path 30.

Even with the above configuration, the battery unit 10 according to the third exemplary embodiment can produce substantially the same effect as the battery unit 10 according to the first exemplary embodiment.

In addition, even if unexpected external force or the like is applied to the bottom 27 of the lower case 22 or the flow-path forming plate 35, an interval in the plate-shaped refrigerant flow path 30 can be advantageously kept while preventing deformation of the bottom 27 of the lower case 22 or the flow-path forming plate 35.

### Fourth Exemplary Embodiment

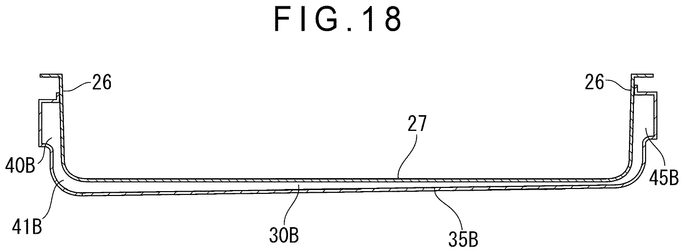

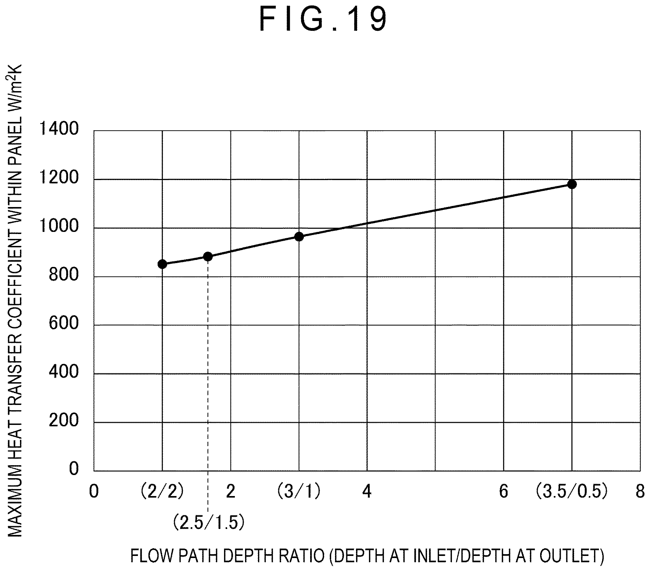

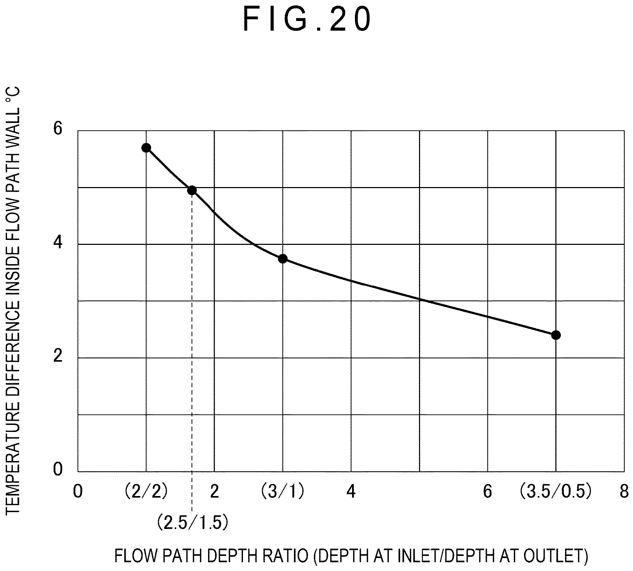

Fig. 18 is a longitudinal cross-sectional view in the flow path direction of the cooling device accompanying the lower case 22 of the battery unit 10 according to a fourth exemplary embodiment. Fig. 19 is a diagram showing results of FEM analysis of a change in the maximum heat transfer coefficient within the panel, which is the heat transfer coefficient at the outlet, with respect to a flow path depth ratio of a depth at the inlet to a depth at the outlet of the plate-shaped refrigerant flow path in Fig. 18. Fig. 20 is a diagram showing results of FEM analysis of a change in a temperature difference inside the flow path wall (a temperature at the output minus a temperature at the input) with respect to the flow path depth ratio same above. The battery unit 10 according to the fourth exemplary embodiment will be described with reference to Figs. 18 to 20.

As depicted in Fig. 18, the battery unit 10 according to the fourth exemplary embodiment is different from the first modification of the first exemplary embodiment in that a flow-path forming plate 35B is arranged such that a flow path interval (also referred to as a flow path depth or a flow path thickness) of a plate-shaped refrigerant flow path 30B gradually decreases from an upstream side of the flow path toward a downstream side thereof. With this arrangement, a position of a liquid refrigerant supply header 40B, a position of a liquid refrigerant discharge header 45B, and a nozzle interval of a refrigerant supply nozzle 41B are also different. Other configurations are substantially the same as those in the first modification of the first exemplary embodiment.

Here, results of a verification test using a numerical simulation on effects of the plate-shaped refrigerant flow path, the flow path interval of which gradually decreases from the upstream side of the flow path toward the downstream side thereof, will be described.

The FEM analysis conditions were set to the similar conditions for the FEM analysis performed in the first and second exemplary embodiments. Specifically, first, the dimension of a cooling surface was set at 1675 mm length × 1156 mm width. The flow path interval was set such that an average of the flow path intervals at the inlet of the flow path and the outlet thereof was 2 mm. With reference to a case with the flow path depth ratio (flow path depth at the inlet / flow path depth at the outlet) being 2 mm/2 mm, calculation was made on cases with 2.5 mm/1.5 mm, 3 mm/1 mm, and 3.5 mm/0.5 mm. As other boundary conditions, a heat flux of 1600 W/m² was applied to the bottom 27 of the lower case, a refrigerant was LLC with a glycerin concentration of 50 mass%, and a temperature of the refrigerant at the inlet of the plate-shaped refrigerant flow path 30B was 20 degrees C. An average flow velocity of the refrigerant in the plate-shaped refrigerant flow path 30B was constantly set at 1 m/s for each flow path depth ratio. For this purpose, the flow rate at the flow path inlet was adjusted for each flow path depth ratio.

Fig. 19 shows results of FEM analysis of a change in the maximum heat transfer coefficient within the panel, which is the heat transfer coefficient at the outlet, with respect to the flow path depth ratio of the depth at the inlet to the depth at the outlet of the plate-shaped refrigerant flow path. It is understood from Fig. 19 that the panel heat transfer coefficient increases as the flow path depth ratio between the depth at the inlet of the flow path and the depth at the outlet thereof (the flow path thickness ratio) increases.

Fig. 20 shows results of FEM analysis of a change in a temperature difference inside the flow path wall (a temperature at the output minus a temperature at the input) with respect to the flow path depth ratio same above. It is understood from Fig. 20 that the temperature difference inside the flow path wall decreases as the flow path depth ratio between the depth at the inlet of the flow path and the depth at the outlet thereof (the flow path thickness ratio) increases. The decrease in the temperature difference inside the flow path wall is caused also by the effects of Fig. 19. By the way, it is understood from Fig. 20 that the temperature difference inside the flow path wall when the flow path depth ratio (of the depth at the inlet of the flow path to the depth at the outlet thereof) is 2 mm/2 mm is about 6 degrees C. This is because, as the refrigerant flowing in the plate-shaped refrigerant flow path 30 flows downward while cooling the battery modules 11 housed in the housing case 20, a temperature of the refrigerant per se is gradually increased by heat transferred from the battery. When the flow velocity is constant, a heat transfer coefficient does not change in the flow path direction. Accordingly, when a predetermined heat generation amount of the battery is transferred, a temperature difference between the bottom 27 of the lower case and the refrigerant is constant. Therefore, as shown by data of the temperature difference inside the flow path wall when the flow path depth ratio (of the depth at the inlet of the flow path to the depth at the outlet thereof) is 2 mm/2 mm in Fig. 20, a temperature of the bottom 27 of the lower case also increases toward the downstream, so that a temperature near the battery cannot be maintained isothermal. In the fourth exemplary embodiment, the flow path interval is gradually decreased toward the flow path direction and the flow velocity of the refrigerant is gradually increased accordingly, whereby the heat transfer coefficient can be gradually increased. Accordingly, the temperature difference between the bottom of the lower case and the refrigerant with respect to a predetermined heat generation amount can be reduced. As a result, even if the temperature of the refrigerant increases, the temperature difference required for heat transfer is reduced, whereby a temperature rise in the flow path direction can be suppressed and the temperature of the bottom 27 of the lower case can be controlled to be uniform.

Even with the above configuration, the battery unit 10 according to the fourth exemplary embodiment can produce substantially the same effect as the battery unit 10 according to the first modification of the first exemplary embodiment.

In addition, a gradual increase in a temperature of the refrigerant flowing inside the plate-shaped refrigerant flow path 30B while cooling the battery modules 11 can be offset by an increase in the heat transfer coefficient that is provided by gradually reducing the space of the refrigerant flow path to gradually increase the flow velocity of the refrigerant. As a result, the battery modules can be cooled uniformly irrespective of the position from the upstream side to the downstream side of the plate-shaped refrigerant flow path 30B and the position of the battery modules within the housing case 20.

### EXPLANATION OF CODES

10: battery unit (battery pack)
11: battery module
12: battery cell (secondary battery cell)
20: housing case
21: upper case (housing cover)
22: lower case (housing tray)
26: vertical wall of lower case
27: bottom of lower case
28: flange of lower case
30, 30B, 30C: plate-shaped refrigerant flow path
35, 35B: flow-path forming plate
35C: flow-path forming plate (checkered embossed plate)
36: spacing retainer (raised portion)
40, 40A, 40B: liquid refrigerant supply header
41, 41B: refrigerant supply nozzle (slit nozzle, flat nozzle)
42: liquid refrigerant introduction pipe
45, 45A, 45B: liquid refrigerant discharge header
47: liquid refrigerant outlet pipe
50: liquid cooler
51: refrigerant inlet
52: refrigerant outlet
53: refrigerant flow path
54: collective refrigerant forward route
55: collective refrigerant return route
60: air duct
61: air blower
100: vehicle (electric vehicle)
111: vehicle body
112: front wheels
113: rear wheels

## Claims

1. A battery unit for a vehicle, comprising:
a battery module comprising a battery cell stack in which a plurality of battery cells are stacked, the battery cells being chargeable and dischargeable;
a housing case comprising an upper case and a lower case, the housing case having a housing space formed therein to house the battery module;
a flow-path forming plate defining a plate-shaped refrigerant flow path with a bottom of the lower case at a predetermined flow path interval therebetween, the battery module being cooled with a liquid refrigerant flowing through the plate-shaped refrigerant flow path from a bottom rear surface of the lower case, the plate-shaped refrigerant flow path having a flow region that accounts for 90% or more of the bottom rear surface of the lower case;
a refrigerant supply nozzle comprising a slit nozzle or a flat nozzle, the liquid refrigerant being supplied through the refrigerant supply nozzle to flow over 90% or more of a flow path width of the plate-shaped refrigerant flow path;
a liquid refrigerant supply header configured to supply the liquid refrigerant to the refrigerant supply nozzle; and
a liquid refrigerant discharge header configured to discharge the liquid refrigerant from the plate-shaped refrigerant flow path.

2. The battery unit for a vehicle according to claim 1, wherein the flow-path forming plate comprises a checkered embossed plate comprising raised portions and sunken portions that are each a truncated pyramid by embossing, the raised portions and the sunken portions being alternately and continuously connected to each other with four sides of a bottom of the truncated pyramid as boundaries.

3. The battery unit for a vehicle according to claim 1 or 2, wherein
the liquid refrigerant supply header is arranged on an outside of a part of a vertical wall of the lower case on an upstream side of the liquid refrigerant,
the liquid refrigerant discharge header is arranged on an outside of a part of the vertical wall of the lower case on a downstream side of the liquid refrigerant, and
the liquid refrigerant supply header and the liquid refrigerant discharge header form an integrated configuration with the vertical wall of the lower case by making the vertical wall and a part of a header wall of each of the liquid refrigerant supply header and the liquid refrigerant discharge header a common wall to the integrated configuration.

4. The battery unit for a vehicle according to claim 3, wherein at least one of the liquid refrigerant supply header or the liquid refrigerant discharge header has a lower end in a header cross section at a height position of half or more of an inner dimension of the header cross section in a height direction from a lower end of the vertical wall of the lower case.

5. The battery unit for a vehicle according to claim 1 or 2, wherein the plate-shaped refrigerant flow path comprises a spacing retainer by which the predetermined flow path interval is complementarily retained.

6. The battery unit for a vehicle according to claim 5, wherein the spacing retainer is a raised portion formed projecting into the flow path from one or both of the bottom of the lower case and the flow-path forming plate.

7. The battery unit for a vehicle according to claim 1 or 2, wherein the flow-path forming plate is arranged such that the flow path interval of the plate-shaped refrigerant flow path gradually decreases from an upstream side of the plate-shaped refrigerant flow path toward a downstream side thereof.
